# FASCICULE DE BREVET EUROPEEN

(11) **EP 3 188 631 B1**
(45) Date de publication et mention de la délivrance du brevet: **17.07.2019**
(21) Numéro de dépôt: 15763971.7
(22) Date de dépôt: 04.09.2015
(51) Int. Cl.: B26D 1/29, B26D 7/26, A47J 43/07, A47J 43/25, B26D 3/18

(54) **DISPOSITIF DE PRÉPARATION D'ALIMENTS ADAPTÉ AU TRAVAIL DES ALIMENTS CUITS ET/OU FRIABLES**
LEBENSMITTELZUBEREITUNGSVORRICHTUNG ZUM ARBEITEN MIT GEKOCHTEN ODER FRITTIERBAREN NAHRUNGSMITTELN
FOOD PREPARATION DEVICE SUITABLE FOR WORKING WITH COOKED OR FRYABLE FOOD

(30) Priorité: 05.09.2014 FR 1458323
(43) Date de publication de la demande: 12.07.2017
(73) Titulaire: SEB S.A., 69130 Ecully (FR)
(72) Inventeur: CHARLES, Patrick, 65290 Louey (FR); LACOURPAILLE, Gérard, 65380 Ossun (FR); BESSONNET, Dominique, 64420 Artigueloutan (FR)
(74) Mandataire: Bourrières, Patrice
(86) Numéro de dépôt international: PCT/FR2015/052353
(87) Numéro de publication internationale: WO 2016/034829

(56) Documents cités:
- WO-A1-2010/012727
- WO-A1-2013/160610
- FR-A1- 2 896 397

## Description

La présente invention concerne le domaine technique des dispositifs de préparation d'aliments comportant un outil de travail rotatif, utilisés pour fragmenter ou découper des aliments, notamment en tranches, en filaments ou en cubes, voire pour extraire des jus et/ou des coulis. Dans une application préférée mais non strictement nécessaire, l'invention se rapporte à un accessoire de préparation d'aliments destiné à être adapté de manière amovible sur un boîtier d'entraînement motorisé.

Le document WO 2010/012727 divulgue un dispositif de préparation d'aliments comportant un outil de travail rotatif présentant une face annulaire d'appui reposant sur un fond d'un élément de boîtier. L'outil de travail rotatif comporte des organes de travail s'étendant à partir d'une partie périphérique d'un moyeu d'entraînement en rotation. Toutefois le moyeu d'entraînement en rotation présente un organe d'entraînement interne s'étendant en dessous du fond. Une telle construction présente l'inconvénient d'augmenter l'encombrement de l'outil de travail.

Un objet de la présente invention est de proposer un dispositif de préparation d'aliments du type précité, dans lequel l'outil de travail rotatif peut présenter une construction plus compacte.

Un autre objet de la présente invention est de proposer un dispositif de préparation d'aliments du type précité, dans lequel l'outil de travail rotatif est adapté au travail des aliments cuits et/ou friables.

Un autre objet de la présente invention est de proposer un appareil électroménager de préparation culinaire comportant un dispositif de préparation d'aliments du type précité, dans lequel l'outil de travail rotatif peut présenter une construction plus compacte.

Un autre objet de la présente invention est de proposer un appareil électroménager de préparation culinaire comportant un dispositif de préparation d'aliments du type précité, dans lequel l'outil de travail rotatif est adapté au travail des aliments cuits et/ou friables.

Ces objets sont atteints avec un dispositif de préparation d'aliments comportant un élément de boîtier et un outil de travail rotatif mobile en rotation autour d'un axe de rotation, l'outil de travail rotatif comportant un organe d'entraînement interne agencé dans un logement axial présentant une ouverture inférieure, l'outil de travail rotatif comportant une face annulaire d'appui entourant l'ouverture inférieure et reposant sur un fond de l'élément de boîtier, l'outil de travail rotatif comportant au moins un organe de travail s'étendant en périphérie de la face annulaire d'appui, du fait que l'organe d'entraînement interne s'étend entièrement au dessus du fond, et que l'outil de travail rotatif comporte au moins une paroi latérale déflectrice agencée entre l'ouverture inférieure et le ou les organe(s) de travail, la paroi latérale déflectrice s'élevant au dessus du fond depuis la face annulaire d'appui avec une distance à l'axe de rotation augmentant dans le sens de rotation de l'outil de travail rotatif. Ces dispositions permettent de balayer la surface du fond autour de l'ouverture inférieure de l'outil de travail rotatif et d'éviter que des infiltrations de particules alimentaires issues de la transformation des aliments puissent atteindre le logement axial et l'organe d'entraînement interne de l'outil de travail rotatif. La ou les parois latérales déflectrices offre(nt) un front mobile qui repousse radialement les particules alimentaires lors de la rotation de l'outil de travail rotatif. La mise à distance des particules alimentaires permet d'éviter un broyage progressif entre la face annulaire d'appui et le fond, qui favorise au contraire leur progression vers le logement axial.

Avantageusement alors, le logement axial est traversant et présente une ouverture supérieure. Cette disposition permet d'entraîner en rotation l'outil de travail rotatif par sa face supérieure.

Avantageusement encore, le fond présente une cheminée axiale s'élevant à l'intérieur du logement axial et l'organe d'entraînement interne est agencé au dessus de la cheminée axiale. Cette disposition permet d'éviter que les particules d'aliments ne s'échappent facilement par l'ouverture axiale du fond ménagée pour le passage des moyens d'entraînement.

Selon un mode de réalisation, la ou au moins l'une des parois latérales déflectrices s'élève en périphérie de la face annulaire d'appui. Cette disposition permet de repousser les particules alimentaires avant que celles-ci ne parviennent sous la face annulaire d'appui. Cette disposition contribue à éviter le broyage de particules alimentaires entre la face annulaire d'appui et le fond.

Avantageusement alors, la ou au moins l'une des parois latérales déflectrices est formée sur une partie périphérique d'un moyeu d'entraînement présentant l'organe d'entraînement interne. Ainsi la ou les parois latérales déflectrices forment des conformations pour repousser radialement les aliments à l'écart du moyeu d'entraînement lors de la rotation de l'outil de travail rotatif. Cette disposition permet de repousser les particules d'aliments avant que celles-ci ne s'infiltrent sous la face annulaire d'appui du moyeu d'entraînement.

Avantageusement alors, le moyeu d'entraînement comporte deux parois latérales déflectrices intercalées entre deux organes de travail s'étendant à partir de la partie périphérique du moyeu d'entraînement. Cette disposition permet d'obtenir un outil de travail rotatif équilibré, dans lequel les particules alimentaires sont repoussées à la périphérie du moyeu d'entraînement entre les organes de travail rotatifs.

Selon un autre mode de réalisation, la ou au moins l'une des parois latérales déflectrices est formée dans la face annulaire d'appui. Ainsi la ou les parois latérales déflectrices forment des conformations pour repousser radialement les aliments vers la périphérie de la face annulaire d'appui lors de la rotation de l'outil de travail rotatif.

Avantageusement encore, l'outil de travail rotatif comprend un anneau périphérique reposant sur le fond de l'élément de boîtier, le ou les organes de travail étant agencé(s) entre la face annulaire d'appui et l'anneau périphérique. Une telle disposition permet de rigidifier l'outil de travail rotatif et de limiter les inclinaisons de l'outil de travail rotatif par rapport à l'axe de rotation, susceptibles de favoriser les infiltrations d'aliments sous la face annulaire d'appui. Une telle disposition peut toutefois aussi contrarier le placage de la face annulaire d'appui du moyeu d'entraînement en rotation sur le fond de l'élément de boîtier. La ou les parois latérales déflectrices évitant l'accumulation de matière alimentaire sous la face annulaire d'appui deviennent alors encore plus intéressantes.

Selon une forme de réalisation, l'outil de travail rotatif forme un disque portant le ou les organes de travail. Une telle disposition permet de réaliser notamment des préparations de type râpés ou émincés, voire d'extraire du jus et/ou du coulis si les aliments utilisés sont juteux ou pulpeux.

Selon une autre forme de réalisation, l'outil de travail rotatif comporte deux organes de travail formés par deux lames opposées, comprenant chacune une arrête de coupe principale située dans un plan de coupe sensiblement perpendiculaire à l'axe de rotation, et un biseau presseur issu de l'arrête de coupe principale. Une telle disposition permet de mieux équilibrer l'outil de travail rotatif lors de sa rotation.

Avantageusement encore, l'élément de boîtier délimite en partie une chambre de travail ouverte à l'opposé du fond, le dispositif de préparation d'aliments comporte un couvercle délimitant en partie la chambre de travail, et l'outil de travail rotatif est agencé entre le couvercle et l'élément de boîtier.

Avantageusement alors, l'outil de travail rotatif est maintenu entre le couvercle et l'élément de boîtier. Cette disposition contribue à limiter les infiltrations d'aliments sous la face annulaire d'appui en favorisant le placage de l'outil de travail rotatif sur le fond.

Avantageusement alors, le couvercle comporte des butées prévues pour un appui glissant sur l'anneau périphérique. Cette disposition permet un maintien encore plus efficace de l'outil de travail rotatif. Ainsi il n'est pas nécessaire que le moyeu d'entraînement en rotation contribue à maintenir efficacement l'orientation de l'outil de travail rotatif par rapport à l'axe de rotation.

Avantageusement encore, le dispositif de préparation d'aliments comprend un carter qui est situé sous l'élément de boîtier, et le carter comprend des moyens de verrouillage coopérant avec le couvercle. Une telle disposition permet de simplifier la construction de l'élément de boîtier et contribue à faciliter son nettoyage.

Avantageusement alors, le couvercle est verrouillé par baïonnette avec le carter. Une telle construction est simple à utiliser, économique à réaliser, et robuste.

Avantageusement encore, le couvercle comprend une goulotte d'introduction des aliments à découper. Une telle disposition est bien adaptée aux outils de travail rotatifs prévus pour une transformation progressive des aliments.

Avantageusement alors l'élément de boîtier présente une fenêtre de coupe agencée en regard de la goulotte, un outil de coupe secondaire étant agencé dans la fenêtre de coupe, l'outil de travail rotatif comprenant au moins une arrête de coupe principale qui est située dans un plan de coupe sensiblement perpendiculaire à l'axe de rotation, et un biseau presseur qui est issu de l'arrête de coupe principale, qui est agencé du côté de l'outil de coupe secondaire disposé dans la fenêtre de coupe, et qui est incliné à partir de l'arrête de coupe principale dans une direction opposée au sens de rotation de l'outil de travail rotatif, de manière à presser les aliments tranchés contre l'outil de coupe secondaire disposé dans la fenêtre de coupe. Une telle disposition permet notamment de réaliser des découpes en cubes ou en bâtonnets.

Avantageusement alors, l'outil de coupe secondaire comprend au moins un organe de coupe qui est situé en regard de la goulotte et qui possède au moins une arrête de coupe orientée vers la goulotte. Cette disposition permet de fendre la tranche découpée par l'arête de coupe principale.

Selon une forme de réalisation, l'outil de coupe secondaire comprend une première série d'organes de coupe sensiblement parallèles entre eux. Une telle disposition permet de découper des bâtonnets de section carrée ou rectangulaire.

Selon une autre forme de réalisation, l'outil de coupe secondaire comprend en outre une deuxième série d'organes de coupe sensiblement parallèles entre eux, la deuxième série d'organes de coupe définissant, avec la première série d'organes de coupe, une grille de découpe. Une telle disposition permet de découper des cubes et/ou des parallélépipèdes.

Ces objets sont atteints également avec un appareil électroménager de préparation culinaire comportant un boîtier motorisé entraînant en rotation un outil de travail rotatif appartenant à un dispositif de préparation d'aliments, du fait que le dispositif de préparation d'aliments est conforme à l'une au moins des caractéristiques précitées.

Selon un mode de réalisation, le boîtier motorisé porte le dispositif de préparation d'aliments. En alternative, le boîtier motorisé pourrait être monté sur le dispositif de préparation d'aliments.

L'invention sera mieux comprise à l'étude d'un exemple de réalisation d'un dispositif de préparation d'aliments avec trois variantes de réalisation d'un outil de travail rotatif, pris à titre nullement limitatif, illustrés dans les figures annexées, dans lesquelles :
- la figure 1 est une vue en perspective et en éclaté d'un exemple de réalisation d'un dispositif de préparation d'aliments selon l'invention,
- la figure 2 est une vue en perspective de dessous d'une première variante de réalisation d'un outil de travail rotatif appartenant au dispositif de préparation d'aliments illustré sur la figure 1,
- la figure 3 est une vue en perspective de dessous partielle et agrandie de l'outil de travail rotatif illustré sur la figure 2,
- la figure 4 est une vue latérale en coupe du dispositif de préparation d'aliments illustré sur la figure 1 utilisant l'outil de travail rotatif illustré sur les figures 2 et 3, selon un plan perpendiculaire à l'axe de rotation de l'outil de travail rotatif,
- les figures 5 et 6 sont respectivement une vue en perspective de dessous et une vue en perspective de dessus d'une deuxième variante de réalisation d'un outil de travail rotatif appartenant au dispositif de préparation d'aliments illustré sur la figure 1,
- la figure 7 est une vue latérale en coupe du dispositif de préparation d'aliments illustré sur la figure 1 utilisant l'outil de travail rotatif illustré sur les figures 5 et 6, selon un plan perpendiculaire à l'axe de rotation de l'outil de travail rotatif,
- la figure 8 est une vue en perspective de dessous d'une troisième variante de réalisation d'un outil de travail rotatif pouvant être utilisé avec le dispositif de préparation d'aliments illustré sur la figure 1,
- la figure 9 est une vue latérale en élévation d'un appareil électroménager de préparation culinaire comportant un dispositif de préparation d'aliments selon l'invention illustré sur la figure 1.

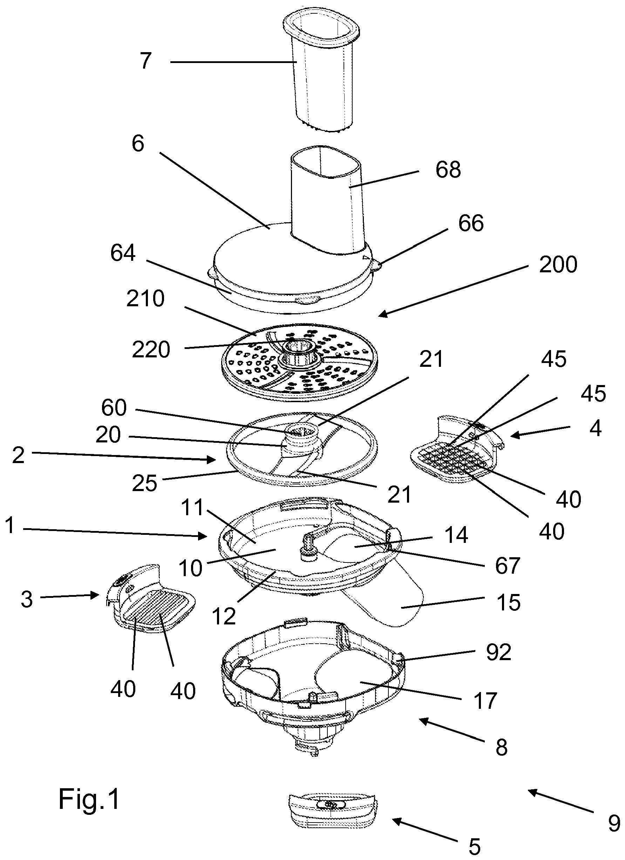

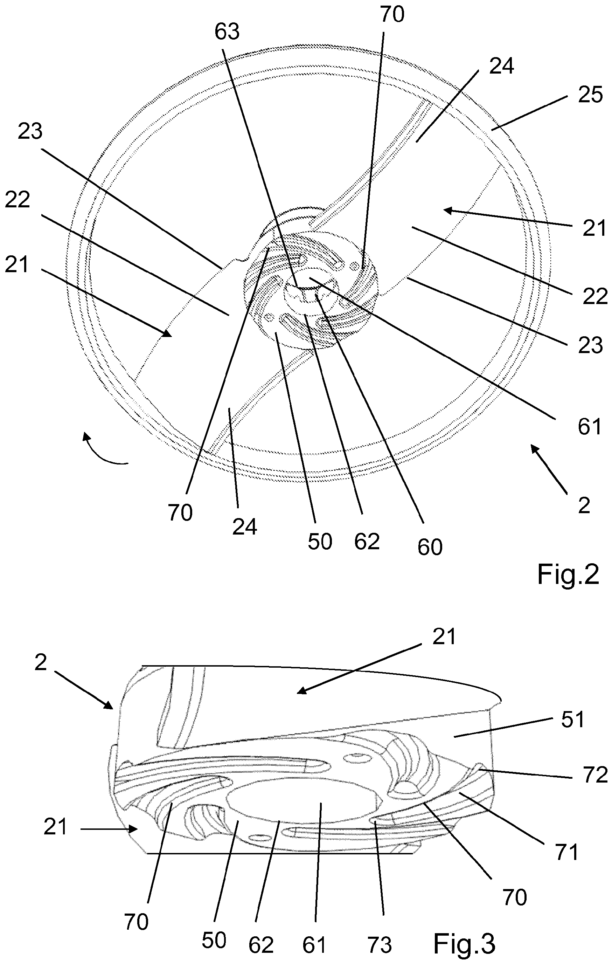

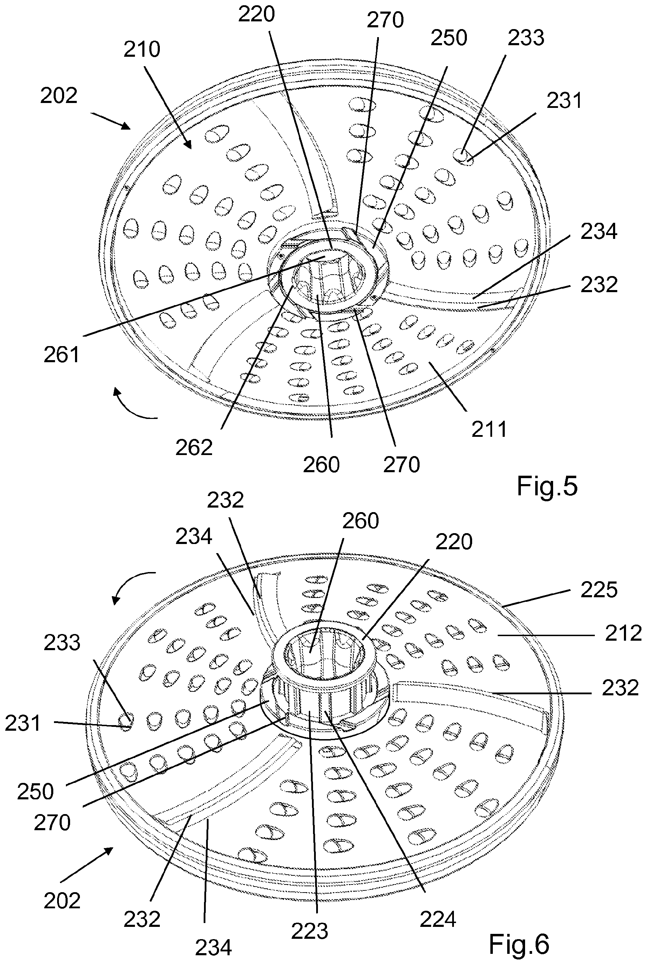

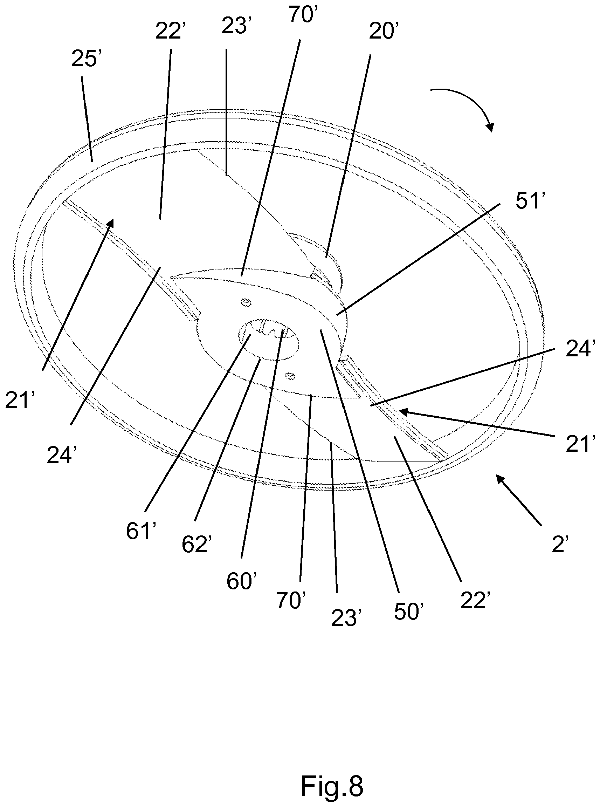

Le dispositif de préparation d'aliments 9 illustré sur la figure 1 comporte un carter 8, un élément de boîtier 1, un outil de travail rotatif 2 primaire, mieux visible sur les figures 2 et 3, trois outils de coupe secondaire 3, 4, 5 fixes interchangeables, utilisés avec l'outil de travail rotatif 2 primaire, un outil de travail rotatif 202 réversible, mieux visible sur les figures 5 et 6, un couvercle 6, et un poussoir 7. La figure 8 illustre un autre outil de travail rotatif 2' primaire pouvant être utilisé en remplacement de l'outil de travail rotatif 2 primaire.

Chaque composant principal peut résulter de l'assemblage de différents éléments, et les composants principaux peuvent en outre être séparés de manière à permettre un nettoyage aisé.

L'élément de boîtier 1 comprend un fond 10 pourvu d'un siège de réception 11 de l'outil de travail rotatif 2 ; 202 ; 2'. Le fond 10 est entouré par un rebord périphérique 12. L'élément de boîtier 1 délimite ainsi en partie une chambre de travail 13 ouverte à l'opposé du fond 10.

Le couvercle 6 délimite en partie la chambre de travail 13. Le couvercle 6 est adapté de manière amovible sur l'élément de boîtier 1 pour fermer en partie au moins la chambre de travail 13.

L'outil de travail rotatif 2 ; 202 ; 2' agencé dans la chambre de travail 13 entre le couvercle 6 et l'élément de boîtier 1 est mobile en rotation autour d'un axe de rotation Δ. Dans l'exemple de réalisation illustré aux figures, la chambre de travail 13 possède avantageusement une forme générale sensiblement cylindrique de révolution selon l'axe de rotation Δ perpendiculaire au fond 10.

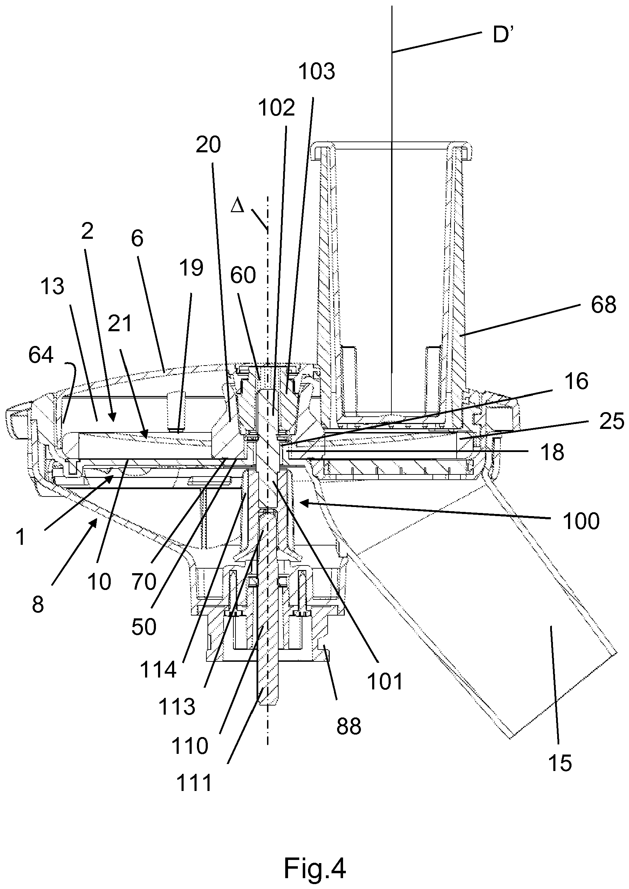

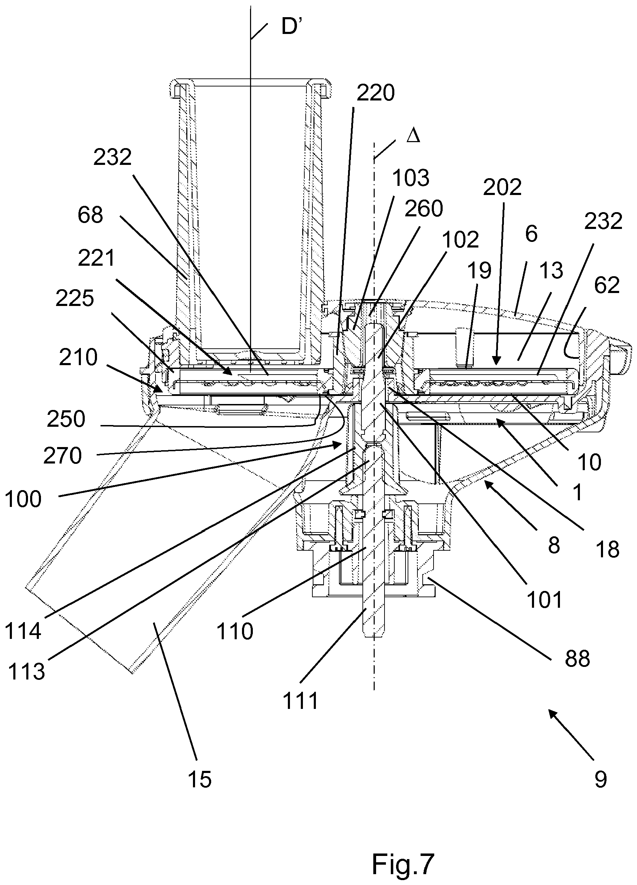

Le couvercle 6 comprend une goulotte 68 d'introduction des aliments à découper. Tel que visible sur les figures 4 et 7, la goulotte 68 s'étend selon une direction longitudinale D' sensiblement parallèle à l'axe de rotation Δ.

Le couvercle 6 est mobile sur ou dans l'élément de boîtier 1 entre une position déverrouillée dans laquelle il peut être retiré de l'élément de boîtier 1 selon un mouvement de translation parallèle à l'axe de rotation Δ et une position verrouillée plus particulièrement illustrée sur les figures 4 et 7 dans laquelle il ne peut pas être désolidarisé de l'élément de boîtier 1. Afin de permettre cette immobilisation du couvercle 6 sur l'élément de boîtier 1, il est mis en oeuvre un système de verrouillage à baïonnette qui comprend quatre languettes 66 portées par la face extérieure d'une jupe périphérique 64 du couvercle 6 et destinées à venir s'engager dans quatre fenêtres d'introduction 67 de l'élément de boîtier 1.

L'élément de boîtier 1 présente une fenêtre de coupe 14 agencée en regard de la goulotte 68, pour recevoir l'un des outils de coupe secondaire 3 ; 4 ; 5 utilisé avec l'un des outils de travail rotatifs 2 ; 2' primaires. L'élément de boîtier 1 comprend un conduit 15 d'évacuation des aliments découpés qui s'étend à l'extérieur de la chambre de travail 13 à l'opposé de la goulotte 68.

Le carter 8 est situé sous l'élément de boîtier 1. Le carter 8 porte l'élément de boîtier 1 et présente une fenêtre de passage 17 pour le passage du conduit 15. Le carter 8 comprend des moyens de verrouillage coopérant avec le couvercle 6. Plus particulièrement dans l'exemple de réalisation illustré sur les figures, le couvercle 6 est verrouillé par baïonnette avec le carter 8. Dans l'exemple de réalisation illustré sur les figures, le carter 8 comporte quatre pattes de verrouillage 92. Les languettes 66 du couvercle 6 viennent se placer en position verrouillée sous les pattes de verrouillage 92 du carter 8. Ainsi l'élément de boîtier 1 se trouve parfaitement immobilisé entre le couvercle 6 et le carter 8. Le couvercle 6 en position verrouillée vient en prise avec le carter 8.

Le dispositif de préparation d'aliments 9 comporte des moyens d'entraînement 100 en rotation de l'outil de travail rotatif 2 ; 202' ; 2' dans la chambre de travail 13. Le fond 10 présente une ouverture axiale 16 pour le passage des moyens d'entraînement 100.

Tel que visible sur les figures 2, 5 et 8, les outils de travail rotatifs 2 ; 202 ; 2' comportent un organe d'entraînement interne 60 ; 260 ; 60' agencé dans un logement axial 61 ; 261 ; 61' présentant une ouverture inférieure 62 ; 262 ; 62'. Les outils de travail rotatifs 2 ; 202 ; 2' comportent une face annulaire d'appui 50 ; 250 ; 50' entourant l'ouverture inférieure 62 ; 262 ; 62'. Les outils de travail rotatifs 2 ; 202 ; 2' comportent au moins un organe de travail 21 ; 231, 232 ; 21' s'étendant en périphérie de la face annulaire d'appui 50 ; 250 ; 50'.

Les outils de travail rotatifs 2 ; 202 ; 2' sont mobiles en rotation autour de l'axe de rotation Δ dans la chambre de travail 13. Tel que visible sur les figures 4 et 7, la face annulaire d'appui 50; 250 repose sur le fond 10 de l'élément de boîtier 1 lorsque l'outil de travail rotatif 2 ; 202 est en place dans la chambre de travail 13. L'outil de travail rotatif 2' peut être utilisé à la place de l'outil de travail rotatif 2, la face annulaire d'appui 50' repose sur le fond 10 de l'élément de boîtier 1 lorsque l'outil de travail rotatif 2' est en place dans la chambre de travail 13. L'organe d'entraînement interne 60 ; 260 ; 60' s'étend entièrement au dessus du fond 10 lorsque l'outil de travail rotatif 2 ; 202 ; 2' est en place dans la chambre de travail 13.

Chacun des outils de travail rotatif 2 ; 202 ; 2' comporte au moins une paroi latérale déflectrice 70 ; 270 ; 70' agencée entre l'ouverture inférieure 62 ; 262 ; 62' et le ou les organes de travail 21 ; 231, 232 ; 21'. Lorsque l'un des outils de travail rotatif 2 ; 202 ; 2' est en place dans la chambre de travail 13, la ou chaque paroi latérale déflectrice 70 ; 270 ; 70' s'élève au dessus du fond 10 depuis la face annulaire d'appui 50 ; 250 ; 50' avec une distance à l'axe de rotation Δ augmentant dans le sens de rotation de l'outil de travail rotatif 2 ; 202 ; 2', pour éjecter les particules d'aliments vers la périphérie de la face annulaire d'appui 50 ; 250 ; 50'. En d'autres termes, les parois latérales déflectrices 70 ; 270 ; 70' présentent un bord d'attaque fuyant vers la périphérie par rapport au sens de rotation de l'outil de travail rotatif 2 ; 202 ; 2'. Les parois latérales déflectrices 70 ; 270 ; 70' exercent une action centrifuge sur les particules d'aliments.

Pour permettre une bonne évacuation des particules alimentaires, les parois déflectrices 70 ; 270 ; 70' présentent un angle par rapport à la perpendiculaire à la direction radiale issue de l'axe de rotation Δ compris entre 20° et 70°, et de préférence entre 30° et 60°, de préférence sur au moins la moitié de leur longueur.

Dans l'exemple de réalisation du dispositif de préparation d'aliments 9 illustré sur la figure 1, le fond 10 présente une cheminée axiale 18. Tel que visible sur les figures 4 et 7, la cheminée axiale 18 s'élève à l'intérieur du logement axial 61 ; 261 lorsque l'outil de travail rotatif 2 ; 202 est en place sur l'élément de boîtier 1. L'organe d'entraînement interne 60 ; 260 est agencé au dessus de la cheminée axiale 18 lorsque l'outil de travail rotatif 2 ; 202 est en place sur l'élément de boîtier 1.

Dans les variantes de réalisation des outils de travail rotatifs 2 ; 202 ; 2' illustrées sur les figures, le logement axial 61 ; 261 ; 61' est traversant, pour permettre le passage des moyens d'entraînement 100. Le logement axial 61 ; 261 ; 61' présente ainsi une ouverture supérieure 63 ; 263. Les outils de travail rotatifs 2 ; 202 ; 2' comprennent un anneau périphérique 25 ; 225 ; 25' reposant sur le fond 10 de l'élément de boîtier 1 lorsque l'outil de travail rotatif 2 ; 202 ; 2' est en place sur l'élément de boîtier 1. Les organes de travail 21 ; 231, 232 ; 21' sont agencés entre la face annulaire d'appui 50; 250; 50' et l'anneau périphérique 25 ; 225 ; 25'.

Dans l'exemple de réalisation illustré sur les figures, les moyens d'entraînement 100 comprennent un arbre d'entraînement 101 d'axe de rotation Δ qui est solidaire de l'élément de boîtier 1. L'arbre d'entraînement 101 possède une tête d'entraînement 102 qui s'étend dans la chambre de travail 13. La tête d'entraînement 102 présente, en coupe transversale, une plus grande dimension strictement inférieure à la plus petite dimension du logement axial 61 ; 261 ; 61'. Ainsi l'arbre d'entraînement 101 ne peut entraîner directement l'outil de travail rotatif 2 ; 202 ; 2'. Dans l'exemple de réalisation illustré sur les figures, la tête d'entraînement 102 possède une forme cannelée.

Afin d'assurer une liaison en rotation de l'outil de travail rotatif 2 ; 202 ; 2' et de l'arbre d'entraînement 101, les moyens d'entraînement 100 comprennent en outre une douille d'entraînement 103 qui est libre en rotation selon l'axe de rotation Δ par rapport au couvercle 6 et liée en translation axiale au couvercle 6. La douille d'entraînement 103 est adaptée pour lier en rotation la tête d'entraînement 102 et l'outil de travail rotatif 2 ; 202 ; 2' lorsque le couvercle 6 est placé sur ou dans l'élément de boîtier 1. A cet effet, la douille d'entraînement 103 comprend un alésage d'entraînement axial de forme complémentaire à celle de la tête d'entraînement 102. L'alésage d'entraînement est adapté pour s'engager sur la tête d'entraînement 102 en translation axiale. L'alésage d'entraînement possède une forme extérieure complémentaire de celle de l'organe d'entraînement interne 60 ; 260 ; 60'. La forme extérieure de l'alésage d'entraînement est adaptée pour s'engager en translation axiale dans l'organe d'entraînement interne 60 ; 260 ; 60'.

Les moyens d'entraînement 100 comprennent en outre un arbre intermédiaire 110 d'axe de rotation Δ qui est solidaire du carter 8 en étant lié en translation à ce dernier et libre en rotation selon l'axe de rotation Δ par rapport à celui-ci. L'arbre intermédiaire 110 comprend un pied d'entraînement 111 qui s'étend à l'extérieur d'une embase 88 du carter 8. Le pied d'entraînement 111 est destiné à coopérer avec un arbre de sortie d'un boîtier d'entraînement motorisé. L'arbre intermédiaire 110 comprend, à l'opposé du pied d'entraînement 111, une tête d'accouplement 113 qui est située à l'intérieur du carter 8 et qui est destinée à coopérer avec un pied d'accouplement 114 porté par l'arbre d'entraînement 101.

Dans les variantes de réalisation illustrées sur les figures 2 et 3 ainsi que sur la figure 8, l'outil de travail rotatif 2 ; 2' primaire comporte un moyeu d'entraînement 20 ; 20' présentant le logement axial 61 ; 61' logeant l'organe d'entraînement interne 60 ; 60'. La face annulaire d'appui 50 ; 50' entoure l'ouverture inférieure 62; 62' du logement axial 61; 61'. Le moyeu d'entraînement 20 ; 20' présente ainsi la face annulaire d'appui 50 ; 50'. L'outil de travail rotatif 2; 2' primaire comporte deux organes de travail 21 ; 21' opposés s'étendant chacun à partir d'une partie périphérique 51 ; 51' du moyeu d'entraînement 20 ; 20'. Les organes de travail 21 ; 21' sont formés par deux lames 22 ; 22' s'étendant à partir du moyeu d'entraînement 20 ; 20'. Chaque lame 22 ; 22' comprend chacune une arrête de coupe principale 23 ; 23' située dans un plan de coupe sensiblement perpendiculaire à l'axe de rotation Δ et un biseau presseur 24 ; 24' issu de l'arrête de coupe principale 23 ; 23'. L'outil de travail rotatif 2 ; 2' comprend également un anneau périphérique 25 ; 25' qui est destiné à venir en appui contre le siège de réception 11 formé par le rebord périphérique 12 extérieur du fond 10. Les organes de travail 21 ; 21' sont agencés entre la face annulaire d'appui 50 ; 50' et l'anneau périphérique 25 ; 25'.

Tel que visible sur la figure 4, l'un 3 des outils de coupe secondaire 3 ; 4 ; 5 est agencé dans la fenêtre de coupe 14. Le biseau presseur 24 est agencé du côté de l'outil de coupe secondaire 3 ; 4 ; 5 disposé dans la fenêtre de coupe 14. Le biseau presseur 24 est incliné à partir de l'arrête de coupe principale 23 dans une direction opposée au sens de rotation de l'outil de travail rotatif 2 primaire, de manière à presser les aliments tranchés contre l'outil de coupe secondaire 3 ; 4 ; 5 disposé dans la fenêtre de coupe 14.

Les outils de coupe secondaire 3, 4, 5 sont interchangeables. L'un des outils de coupe secondaire 3 ; 4 ; 5 peut être agencé dans la fenêtre de coupe 14 pour être utilisé avec l'outil de travail rotatif 2 primaire disposé dans la chambre de travail 13 et entraîné par la forme extérieure de la douille d'entraînement 103 du couvercle 6. Chaque outil de coupe secondaire 3 ; 4 ; 5 comprend au moins un organe de coupe 40 qui est situé en regard de la goulotte 68 et qui possède au moins une arrête de coupe 41 orientée vers la goulotte 68. Dans l'exemple de réalisation illustré sur les figures, les outils de coupe secondaire 3 ; 4 ; 5 comprennent une première série d'organes de coupe 40 sensiblement parallèles entre eux. Certains 4, 5 des outils de coupe secondaire 3 ; 4 ; 5 comprennent une deuxième série d'organes de coupe 45 sensiblement parallèles entre eux, la deuxième série d'organes de coupe 45 définissant, avec la première série d'organes de coupe 40, une grille de découpe. Le premier outil de coupe secondaire 3 permet de réaliser une découpe d'aliments en bâtonnets lorsqu'il est utilisé avec l'outil de travail rotatif 2 ; 2' primaire. Les deuxième et troisième outils de coupe secondaire 4 et 5 permettent de réaliser des découpes en cubes lorsqu'ils sont utilisés avec l'outil de travail rotatif 2 ; 2' primaire.

Dans la variante de réalisation illustrée sur les figures 2 et 3, les parois latérales déflectrices 70 sont formées dans la face annulaire d'appui 50. En d'autres termes, les parois latérales déflectrices 70 sont formées sous le moyeu 20. Ainsi les parois latérales déflectrices 70 forment des conformations dans la face annulaire d'appui 50 pour repousser radialement les aliments vers la périphérie de la face annulaire d'appui 50 lors de la rotation de l'outil de travail rotatif 2 disposé sur le fond 10.

Tel que bien visible sur les figures 2 et 3, les parois latérales déflectrices 70 sont formées par des canaux 71 présentant une extrémité ouverte 72 débouchant dans la partie périphérique 51 du moyeu d'entraînement 20. Les canaux 71 forment un angle avec la direction radiale issue du centre du moyeu d'entraînement. La section des canaux 71 est dimensionnée pour favoriser la progression des particules alimentaires vers l'extrémité ouverte 72. Les canaux 71 présentent par exemple une largeur d'au moins 2 mm et une profondeur d'au moins 1,5 mm.

Les canaux 71 présentent une autre extrémité 73 fermée. Les canaux 71 s'interrompent ainsi à distance de l'ouverture inférieure 62. La face annulaire d'appui 50 présente ainsi une paroi annulaire entourant l'ouverture inférieure 62. A titre de variante, les canaux 71 ne présentent pas nécessairement une autre extrémité 73 fermée. Au moins l'un des canaux pourrait notamment présenter une autre extrémité 73 ouverte.

Le dispositif de préparation d'aliments 9 illustré sur les figures 1 et 4 s'utilise et fonctionne de la manière suivante avec l'outil de travail rotatif 2 primaire illustré sur les figures 2 et 3.

Lorsque l'utilisateur souhaite découper des pommes de terre déjà cuites en bâtonnets ou en cubes avec l'outil de travail rotatif 2 primaire associé à l'un des outils de coupe secondaire 3, 4, 5, des particules alimentaires, notamment d'amidon, peuvent s'accumuler sur le fond 10. En l'absence de paroi latérale déflectrice, la face annulaire d'appui 50 de l'outil de travail rotatif 2 tournant sur le fond 10 peut contribuer à broyer ces particules alimentaires qui tendent à s'infiltrer sous la face annulaire d'appui 50. Les parois latérales déflectrices 70 formées sous la face annulaire d'appui 50 contribuent à recueillir ces particules alimentaires dans les canaux 71 avant qu'une quantité trop importante de particules alimentaires ne s'accumule sous la face annulaire d'appui 50. Avec la rotation de l'outil de travail rotatif 2, les parois latérales déflectrices 70 présentant un rayon croissant selon le sens de rotation de l'outil de travail rotatif 2 repoussent les particules alimentaires radialement vers la périphérie du moyeu d'entraînement 20. La progression des particules alimentaires vers l'ouverture inférieure 62 de l'outil de travail rotatif 2 peut ainsi être contrariée.

Les figures 5 et 6 illustrent une deuxième variante de réalisation d'un outil de travail rotatif 202 prévu pour être utilisé avec le dispositif de préparation d'aliments 9 illustré sur la figure 1, dans lequel les parois latérales déflectrices 270 sont également formées dans la face annulaire d'appui 250. L'outil de travail rotatif 202 comporte un moyeu d'entraînement 220. Les parois latérales déflectrices 270 sont formées par des canaux 271 présentant une extrémité ouverte 272. Tel que mieux visible sur la figure 6, les canaux 271 présentent une autre extrémité 273 ouverte débouchant en regard du moyeu d'entraînement 220.

L'outil de travail rotatif 202 diffère de l'outil de travail rotatif 2 en ce qu'il forme un disque 210 portant des organes de travail 231, 232.

Dans la variante de réalisation illustrée sur les figures 5 et 6, l'outil de travail rotatif 200 est réversible. Le disque 210 présente deux faces 211, 212 opposées. Chaque face 211, 212 présente au moins un organe de travail 231, 232 agencé entre la face annulaire d'appui 250 et la bordure périphérique 225. Tel que représenté sur les figures 5 et 6, la face 211 comporte une pluralité d'organes de travail 231 pour râper ou effiler les aliments, et la face 212 comporte trois organes de travail 232 de type lame pour trancher les aliments. Les organes de travail 231, 232 sont chacun adjacents à un passage traversant 233, 234. Le moyeu d'entraînement 220 possède une forme cannelée, tel que bien visible sur les figures 5 et 6. Le moyeu d'entraînement 220 est monté mobile en translation par rapport au disque 210 selon la direction de l'axe de rotation Δ, de sorte que l'outil de travail rotatif 202 puisse reposer sur la face annulaire d'appui 250 et la bordure périphérique 225 quelle que soit la face 211, 212 utilisée. Ainsi l'outil de travail rotatif 202 comporte deux faces annulaires d'appui 250 disposées autour du moyeu d'entraînement 220.

La figure 8 illustre une troisième variante de réalisation d'un outil de travail rotatif 2' prévu pour être utilisé avec le dispositif de préparation d'aliments 9 illustré sur la figure 1. L'outil de travail rotatif 2' comporte un moyeu d'entraînement 20' présentant l'organe d'entraînement interne 60' et la face annulaire d'appui 50'. Les organes de travail 21' sont identiques aux organes de travail 21 de la première variante de réalisation.

L'outil de travail rotatif 2' diffère de l'outil de travail rotatif 2 en ce que les parois latérales déflectrices 70' s'élèvent en périphérie de la face annulaire d'appui 50'.

Dans la variante de réalisation illustrée sur la figure 8, les parois latérales déflectrices 70' sont formées sur une partie périphérique 51' du moyeu d'entraînement 20'. Le moyeu d'entraînement 20' comporte deux parois latérales déflectrices 70' intercalées entre deux organes de travail 21' s'étendant à partir de la partie périphérique 51' du moyeu d'entraînement 20'.

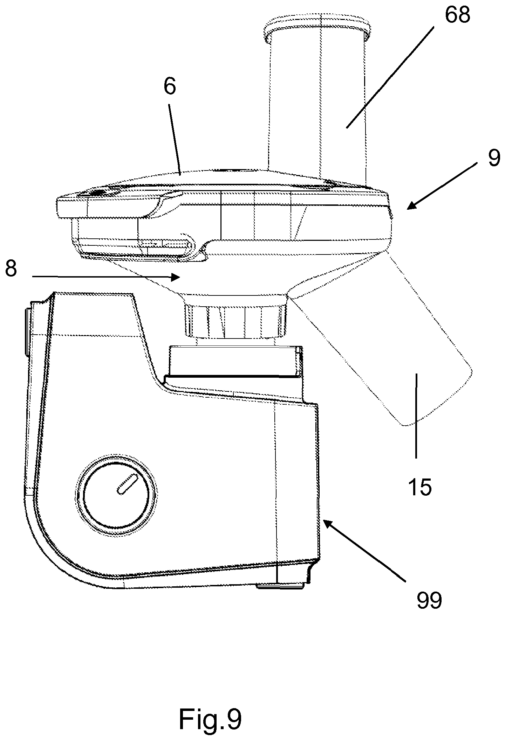

La figure 9 illustre un appareil électroménager de préparation culinaire comportant un boîtier motorisé 99 et le dispositif de préparation d'aliments 9. Le boîtier motorisé 99 porte le dispositif de préparation d'aliments 9. Le boîtier motorisé 99 présente un arbre de sortie vertical. Le boîtier motorisé 99 entraîne ainsi en rotation l'outil de travail rotatif 2 ; 202 ; 2' (non visible sur la figure 9) utilisé dans le dispositif de préparation d'aliments 9.

A titre de variante, l'outil de travail rotatif 202 réversible peut comporter au moins un organe de travail 231, 232 par face 211, 212.

A titre de variante, les organes de travail 231, 232 ne sont pas nécessairement adjacents à un passage traversant. Si désiré, certains organes de travail peuvent notamment être formés par des protubérances rugueuses prévues pour râper des aliments friables.

A titre de variante, l'outil de travail 202 pourrait comporter au moins une paroi latérale déflectrice 70' s'élevant en périphérie de l'une des faces annulaires d'appui 250.

A titre de variante, l'outil de travail rotatif 202 n'est pas nécessairement réversible.

A titre de variante, l'élément de boîtier 1 n'est pas nécessairement verrouillé avec le couvercle 6 lorsque le carter 8 est verrouillé avec le couvercle 6.

A titre de variante, le couvercle 6 n'est pas nécessairement verrouillé par baïonnette avec le carter 8. Le couvercle 6 peut notamment être assemblé avec le carter 8 par vissage, par au moins une bride ou par au moins un crochet.

A titre de variante, le couvercle 6 n'est pas nécessairement amovible par rapport à l'élément de boîtier 1 et au carter 8. Le couvercle 6 peut notamment être monté pivotant sur l'élément de boîtier 1 ou sur le carter 8.

A titre de variante, le carter 8 ne comprend pas nécessairement des moyens de verrouillage coopérant avec le couvercle 6. Le carter 8 peut notamment comprendre des moyens de verrouillage coopérant avec l'élément de boîtier 1, l'élément de boîtier 1 comportant d'autres moyens de verrouillage coopérant avec le couvercle 6.

A titre de variante, le dispositif de préparation d'aliments 9 ne comporte pas nécessairement un carter 8. L'élément de boîtier 1 peut notamment présenter une embase d'adaptation sur un boîtier motorisé.

A titre de variante, les moyens d'entraînement 100 ne comprennent pas nécessairement une douille d'entraînement 103 portée par le couvercle 6 et/ou un arbre d'entraînement 101 solidaire de l'élément de boîtier 1. La tête d'accouplement 113 peut notamment entraîner directement l'outil de travail rotatif 2. D'autres dispositifs de sécurité pouvant être envisagés pour éviter l'accès à l'outil de travail rotatif 2 en l'absence du couvercle 6, notamment un interrupteur électrique ou magnétique détectant la présence du couvercle 6 correctement verrouillé sur le carter 8.

A titre de variante, l'outil de travail rotatif 2 ; 202 ; 2' peut comporter au moins un organe de travail 21 ; 231, 232 ; 21' s'étendant en périphérie de la face annulaire d'appui 50 ; 250 ; 50'.

A titre de variante, l'outil de travail rotatif 2 ; 202 ; 2' peut comporter au moins une paroi latérale déflectrice 70 ; 270 ; 70' agencée entre l'ouverture inférieure 62 ; 262 ; 62' et le ou les organe(s) de travail 21 ; 231, 232 ; 21'.

A titre de variante, la face annulaire d'appui ne forme pas nécessairement un anneau d'appui. La face annulaire d'appui pourrait notamment être formée par les faces inférieures d'une série de nervures fuyantes, de préférence au nombre de trois au moins, les parois latérales déflectrices étant formées par tout ou partie de l'une des faces latérales desdites nervures fuyantes.

La présente invention n'est nullement limitée aux exemples de réalisation décrits, mais englobe de nombreuses modifications dans le cadre des revendications.

## Revendications

1. Dispositif de préparation d'aliments (9) comportant un élément de boîtier (1) et un outil de travail rotatif (2 ; 202 ; 2') mobile en rotation autour d'un axe de rotation (Δ), l'outil de travail rotatif (2 ; 202 ; 2') comportant un organe d'entraînement interne (60 ; 260 ; 60') agencé dans un logement axial (61 ; 261 ; 61') présentant une ouverture inférieure (62 ; 262 ; 62'), l'outil de travail rotatif (2 ; 202 ; 2') comportant une face annulaire d'appui (50 ; 250 ; 50') entourant l'ouverture inférieure (62 ; 262 ; 62') et reposant sur un fond (10) de l'élément de boîtier (1), l'outil de travail rotatif (2 ; 202 ; 2') comportant au moins un organe de travail (21 ; 231, 232; 21') s'étendant en périphérie de la face annulaire d'appui (50 ; 250 ; 50'), **caractérisé en ce que** l'organe d'entraînement interne (60 ; 260 ; 60') s'étend entièrement au dessus du fond (10), et **en ce que** l'outil de travail rotatif (2 ; 202 ; 2') comporte au moins une paroi latérale déflectrice (70 ; 270 ; 70') agencée entre l'ouverture inférieure (62 ; 262 ; 62') et le ou les organe(s) de travail (21 ; 231, 232 ; 21'), ladite paroi latérale déflectrice (70 ; 270 ; 70') s'élevant au dessus du fond (10) depuis la face annulaire d'appui (50 ; 250 ; 50') avec une distance à l'axe de rotation (Δ) augmentant dans le sens de rotation de l'outil de travail rotatif (2 ; 202 ; 2').

2. Dispositif de préparation d'aliments (9) selon la revendication 1, **caractérisé en ce que** le logement axial (61 ; 261 ; 61') est traversant et présente une ouverture supérieure (63 ; 263 ; 63').

3. Dispositif de préparation d'aliments (9) selon l'une des revendications 1 ou 2, **caractérisé en ce que** le fond (10) présente une cheminée axiale (18) s'élevant à l'intérieur du logement axial (61 ; 261 ; 61') et **en ce que** l'organe d'entraînement interne (60 ; 260 ; 60') est agencé au dessus de la cheminée axiale (18).

4. Dispositif de préparation d'aliments (9) selon l'une des revendications 1 à 3, **caractérisé en ce que** la ou au moins l'une des parois latérales déflectrices (70') s'élève en périphérie de la face annulaire d'appui (50').

5. Dispositif de préparation d'aliments (9) selon la revendication 4, **caractérisé en ce que** la ou au moins l'une des parois latérales déflectrices (70') est formée sur une partie périphérique (51') d'un moyeu d'entraînement (20') présentant l'organe d'entraînement interne (60').

6. Dispositif de préparation d'aliments (9) selon la revendication 5, **caractérisé en ce que** le moyeu d'entraînement (20') comporte deux parois latérales déflectrices (70') intercalées entre deux organes de travail (21') s'étendant à partir de la partie périphérique (51') du moyeu d'entraînement (20').

7. Dispositif de préparation d'aliments (9) selon l'une des revendications 1 à 6, **caractérisé en ce que** la ou au moins l'une des parois latérales déflectrices (70 ; 270) est formée dans la face annulaire d'appui (50 ; 250).

8. Dispositif de préparation d'aliments (9) selon l'une des revendications 1 à 7, **caractérisé en ce que** l'outil de travail rotatif (2 ; 202 ; 2') comprend un anneau périphérique (25 ; 225 ; 25') reposant sur le fond (10) de l'élément de boîtier (1), et **en ce que** le ou les organes de travail (21 ; 231, 232 ; 21') est/sont agencé(s) entre la face annulaire d'appui (50 ; 250 ; 50') et l'anneau périphérique (25 ; 225 ; 25').

9. Dispositif de préparation d'aliments (9) selon l'une des revendications 1 à 8, **caractérisé en ce que** l'outil de travail rotatif (202) forme un disque (210) portant le ou les organes de travail (231, 232).

10. Dispositif de préparation d'aliments (9) selon l'une des revendications 1 à 8, **caractérisé en ce que** l'outil de travail rotatif (2 ; 2') comporte deux organes de travail (21 ; 21') formés par deux lames (22 ; 22') opposées, comprenant chacune une arrête de coupe principale (23 ; 23') située dans un plan de coupe sensiblement perpendiculaire à l'axe de rotation (Δ), et un biseau presseur (24 ; 24') issu de l'arrête de coupe principale (23 ; 23').

11. Dispositif de préparation d'aliments (9) selon l'une des revendications 1 à 10, **caractérisé en ce que** l'élément de boîtier (1) délimite en partie une chambre de travail (13) ouverte à l'opposé du fond (10), **en ce que** le dispositif de préparation d'aliments (9) comporte un couvercle (6) délimitant en partie la chambre de travail, et **en ce que** l'outil de travail rotatif (2 ; 202) est agencé entre le couvercle (6) et l'élément de boîtier (1).

12. Dispositif de préparation d'aliments (9) selon la revendication 11, **caractérisé en ce que** l'outil de travail rotatif (2 ; 202 ; 2') est maintenu entre le couvercle (6) et l'élément de boîtier (1).

13. Dispositif de préparation d'aliments (9) selon les revendications 8 et 12, **caractérisé en ce que** le couvercle (6) comporte des butées (19) prévues pour un appui glissant sur l'anneau périphérique (25 ; 225 ; 25').

14. Dispositif de préparation d'aliments (9) selon l'une des revendications 11 à 13, **caractérisé en ce que** le couvercle (6) comprend une goulotte (68) d'introduction des aliments à découper.

15. Dispositif de préparation d'aliments (9) selon la revendication 14, **caractérisé en ce que** l'élément de boîtier (1) présente une fenêtre de coupe (14) agencée en regard de la goulotte (68), **en ce qu'**un outil de coupe secondaire (3 ; 4 ; 5) est agencé dans la fenêtre de coupe (14), et **en ce que** l'outil de travail rotatif (2 ; 2') comprend au moins une arrête de coupe principale (23 ; 23') qui est située dans un plan de coupe (P) sensiblement perpendiculaire à l'axe de rotation (Δ), et un biseau presseur (24) qui est issu de l'arrête de coupe principale (23 ; 23'), qui est agencé du côté de l'outil de coupe secondaire (3 ; 4 ; 5) disposé dans la fenêtre de coupe (14), et qui est incliné à partir de l'arrête de coupe principale (23) dans une direction opposée au sens de rotation de l'outil de travail rotatif (2 ; 2'), de manière à presser les aliments tranchés contre l'outil de coupe secondaire (3 ; 4 ; 5) disposé dans la fenêtre de coupe (14).

16. Appareil électroménager de préparation culinaire comportant un boîtier motorisé (99) entraînant en rotation un outil de travail rotatif (2 ; 202 ; 2') appartenant à un dispositif de préparation d'aliments (9), **caractérisé en ce que** le dispositif de préparation d'aliments (9) est conforme à l'une des revendications 1 à 15.

17. Appareil électroménager de préparation culinaire selon la revendication 16, **caractérisé en ce que** le boîtier motorisé (99) porte le dispositif de préparation d'aliments (9).

## Patentansprüche

1. Lebensmittelzubereitungseinrichtung (9), das ein Gehäuseelement (1) und ein drehendes Arbeitswerkzeug (2; 202; 2'), drehbeweglich um eine Drehachse (Δ), einschließt, wobei das drehende Arbeitswerkzeug (2; 202; 2') ein inneres Antriebsteil (60; 260; 60') einschließt, das in einer axialen Aufnahme (61; 261; 61'), die eine untere Öffnung (62; 262; 62') aufweist, angeordnet ist, wobei das drehende Arbeitswerkzeug (2; 202; 2') eine ringförmige Auflagefläche (50; 250; 50') einschließt, die die untere Öffnung (62; 262; 62') umgibt und auf einem Boden (10) des Gehäuseelements (1) ruht, wobei das drehende Arbeitswerkzeug (2; 202; 2') mindestens ein Arbeitsteil (21; 231, 232; 21') einschließt, das sich am Umfang der ringförmigen Auflagefläche (50; 250; 50') erstreckt, **dadurch gekennzeichnet, dass** das innere Antriebsteil (60; 260; 60') sich vollständig oberhalb des Bodens (10) erstreckt, und dadurch, dass das drehende Arbeitswerkzeug (2; 202; 2') mindestens eine ablenkende Seitenwand (70; 270; 70') einschließt, die zwischen der unteren Öffnung (62; 262; 62') und dem oder den Arbeitsteil(en) (21; 231, 232; 21') angeordnet ist, wobei die ablenkende Seitenwand (70; 270; 70') sich von der ringförmigen Auflagefläche (50; 250; 50') ausgehend oberhalb des Bodens (10) mit einem Abstand zur Drehachse (Δ) erstreckt, der in der Drehrichtung des drehenden Arbeitswerkzeugs (2; 202; 2') zunimmt.

2. Lebensmittelzubereitungseinrichtung (9) nach Anspruch 1, **dadurch gekennzeichnet, dass** die axiale Aufnahme (61; 261; 61') querverlaufend ist und eine obere Öffnung (63; 263; 63') aufweist.

3. Lebensmittelzubereitungseinrichtung (9) nach einem der Ansprüche 1 oder 2, **dadurch gekennzeichnet, dass** der Boden (10) einen axialen Abzug (18) aufweist, der sich im Inneren der axialen Aufnahme (61; 261; 61') erhebt, und dadurch, dass das innere Antriebsteil (60; 260; 60') oberhalb des axialen Abzugs (18) angeordnet ist.

4. Lebensmittelzubereitungseinrichtung (9) nach einem der Ansprüche 1 bis 3, **dadurch gekennzeichnet, dass** die oder mindestens die eine der ablenkenden Seitenwände (70') sich am Umfang der ringförmigen Auflagefläche (50') erhebt.

5. Lebensmittelzubereitungseinrichtung (9) nach Anspruch 4, **dadurch gekennzeichnet, dass** die oder mindestens die eine der ablenkenden Seitenwände (70') auf einem umfänglichen Abschnitt (51') einer Antriebswelle (20'), das innere Antriebsteil (60') aufweisend, gebildet ist.

6. Lebensmittelzubereitungseinrichtung (9) nach Anspruch 5, **dadurch gekennzeichnet, dass** die Antriebswelle (20') zwei ablenkende Seitenwände (70') einschließt, die zwischen zwei Arbeitsteilen (21') eingefügt sind, die sich vom umfänglichen Abschnitt (51') der Antriebswelle (20') ausgehend erstrecken.

7. Lebensmittelzubereitungseinrichtung (9) nach einem der Ansprüche 1 bis 6, **dadurch gekennzeichnet, dass** die oder mindestens die eine der ablenkenden Seitenwände (70; 270) in der ringförmigen Auflagefläche (50; 250) gebildet ist.

8. Lebensmittelzubereitungseinrichtung (9) nach einem der Ansprüche 1 bis 7, **dadurch gekennzeichnet, dass** das drehende Arbeitswerkzeug (2; 202; 2') einen umfänglichen Ring (25; 225; 25') umfasst, der auf dem Boden (10) des Gehäuseelements (1) ruht, und dadurch, dass das oder die Arbeitsteile (21; 231, 232; 21') zwischen der ringförmigen Auflagefläche (50; 250; 50') und dem umfänglichen Ring (25; 225; 25') angeordnet ist/sind.

9. Lebensmittelzubereitungseinrichtung (9) nach einem der Ansprüche 1 bis 8, **dadurch gekennzeichnet, dass** das drehende Arbeitswerkzeug (202) eine Platte (210) bildet, die das oder die Arbeitsteile (231, 232) trägt.

10. Lebensmittelzubereitungseinrichtung (9) nach einem der Ansprüche 1 bis 8, **dadurch gekennzeichnet, dass** das drehende Arbeitswerkzeug (2; 2') zwei Arbeitsteile (21; 21') einschließt, die durch zwei gegenüberliegende Klingen (22; 22') gebildet sind, die jeweils eine Hauptschneide (23; 23'), in einer im Wesentlichen senkrecht zur Drehachse ((Δ) stehenden Schneideebene gelegen, und eine aus der Hauptschneide (23; 23') hervorgehende Pressschräge (24; 24') umfassen.

11. Lebensmittelzubereitungseinrichtung (9) nach einem der Ansprüche 1 bis 10, **dadurch gekennzeichnet, dass** das Gehäuseelement (1) teilweise einen offenen Arbeitsraum (13) gegenüber vom Boden (10) abgrenzt, und dadurch, dass die Lebensmittelzubereitungseinrichtung (9) einen Deckel (6) einschließt, der teilweise den Arbeitsraum abgrenzt, und dadurch, dass das drehende Arbeitswerkzeug (2; 202) zwischen dem Deckel (6) und dem Gehäuseelement (1) angeordnet ist.

12. Lebensmittelzubereitungseinrichtung (9) nach Anspruch 11, **dadurch gekennzeichnet, dass** das drehende Arbeitswerkzeug (2; 202; 2') zwischen dem Deckel (6) und dem Gehäuseelement (1) gehalten wird.

13. Lebensmittelzubereitungseinrichtung (9) nach Ansprüchen 8 und 12, **dadurch gekennzeichnet, dass** der Deckel (6) Anschläge (19) einschließt, die für einen gleitende Auflage auf dem umfänglichen Ring (25; 225; 25') vorgesehen sind.

14. Lebensmittelzubereitungseinrichtung (9) nach einem der Ansprüche 11 bis 13, **dadurch gekennzeichnet, dass** der Deckel (6) einen Schacht (68) für die Einführung der zu schneidenden Lebensmittel umfasst.

15. Lebensmittelzubereitungseinrichtung (9) nach Anspruch 14, **dadurch gekennzeichnet, dass** das Gehäuseelement (1) ein Schneidfenster (14) aufweist, das dem Schacht (68) zugewandt angeordnet ist, dadurch, dass ein sekundäres Schneidwerkzeug (3; 4; 5) im Schneidfenster (14) angeordnet ist, und dadurch, dass das drehende Arbeitswerkzeug (2; 2') mindestens eine Hauptschneide (23; 23') umfasst, die in einer im Wesentlichen senkrecht zur Drehachse (Δ) stehenden Schneideebene (P) gelegen ist, und eine Pressschräge (24), die aus der Hauptschneide (23; 23') hervorgeht, die auf der Seite des im Schneidfenster (14) aufgestellten sekundären Schneidwerkzeugs (3; 4; 5) angeordnet ist, und die von der Hauptschneide (23) ausgehend in einer zur Drehrichtung des drehenden Arbeitswerkzeugs (2; 2') entgegengesetzten Ausrichtung geneigt ist, sodass sie die zerkleinerten Lebensmittel gegen das im Schneidfenster (14) aufgestellte sekundäre Schneidwerkzeug (3; 4; 5) presst.

16. Elektrohaushaltsgerät zur Zubereitung von Speisen, einschließlich eines motorisierten Gehäuses (99), das ein zu einer Lebensmittelzubereitungseinrichtung (9) gehörendes drehendes Arbeitswerkzeug (2; 202; 2') in Drehbewegung versetzt, **dadurch gekennzeichnet, dass** die Lebensmittelzubereitungseinrichtung (9) einem der Ansprüche 1 bis 15 entspricht.

17. Elektrohaushaltsgerät zur Zubereitung von Speisen nach Anspruch 16, **dadurch gekennzeichnet, dass** das motorisierte Gehäuse (99) die Lebensmittelzubereitungseinrichtung (9) trägt.

## Claims

1. Food preparation device (9) comprising a casing element (1) and a rotating work tool (2; 202; 2') mobile in rotation about an axis of rotation (Δ), the rotating work tool (2; 202; 2') comprising an inner drive member (60; 260; 60') arranged in an axial housing (61; 261; 61') having a lower opening (62; 262; 62'), the rotating work tool (2; 202; 2') comprising an annular supporting face (50; 250; 50') surrounding the lower opening (62; 262; 62') and resting on a bottom (10) of the casing element (1), the rotating work tool (2; 202; 2') comprising at least one work member (21; 231; 232; 21') extending into the periphery of the annular supporting face (50; 250; 50'), **characterised in that** the inner drive member (60; 260; 60') extends fully above the bottom (10), and **in that** the rotating work tool (2; 202; 2') comprises at least one deflecting side wall (70; 270; 70') arranged between the lower opening (62; 262; 62') and the work member(s) (21; 231, 232; 21'), said deflecting side wall (70; 270; 70') raising above the bottom (10) from the annular supporting face (50; 250; 50') with a distance at the rotation axis (Δ) increasing in the rotation direction of the rotating work tool (2; 202; 2').

2. Food preparation device (9) according to claim 1, **characterised in that** the axial housing (61; 261; 61') passes through and has an upper opening (63; 263; 63').

3. Food preparation device (9) according to one of claims 1 or 2, **characterised in that** the bottom (10) has an axial funnel (18) raising inside the axial housing (61; 261; 61') and **in that** the inner drive member (60; 260; 60') is arranged above the axial funnel (18).

4. Food preparation device (9) according to one of claims 1 to 3, **characterised in that** the or at least one of the deflecting side walls (70') raises into the periphery of the annular supporting face (50').

5. Food preparation device (9) according to claim 4, **characterised in that** the or at least one of the deflecting side walls (70') is formed on a peripheral portion (51') of a drive axle (20') having the inner drive member (60').

6. Food preparation device (9) according to claim 5, **characterised in that** the drive axle (20') comprises two deflecting side walls (70') inserted between two work members (21') extending from the peripheral portion (51') of the drive axle (20').

7. Food preparation device (9) according to one of claims 1 to 6, **characterised in that** the or at least one of the deflecting side walls (70; 270) is formed in the annular supporting face (50; 250).

8. Food preparation device (9) according to one of claims 1 to 7, **characterised in that** the rotating work tool (2; 202; 2') comprises a peripheral ring (25; 225; 25') resting on the bottom (10) of the casing element (1), and **in that** the work member(s) (21; 231; 232; 21') is/are arranged between the annular supporting face (50; 250; 50') and the peripheral ring (25; 225; 25').

9. Food preparation device (9) according to one of claims 1 to 8, **characterised in that** the rotating work tool (202) forms a disc (210) carrying the work member(s) (231, 232).

10. Food preparation device (9) according to one of claims 1 to 8, **characterised in that** the rotating work tool (2; 2') comprises two work members (21; 21') formed by two opposite blades (22; 22'), each comprising a main cutting edge (23; 23') located in a cutting plane substantially perpendicular to the axis of rotation (Δ), and a press bevel (24; 24') coming from the main cutting edge (23; 23').

11. Food preparation device (9) according to one of claims 1 to 10, **characterised in that** the casing element (1) partially delimits an open work chamber (13) opposite the bottom (10), **in that** the food preparation device (9) comprises a cover (6) partially delimiting the work chamber, and **in that** the rotating work tool (2; 202) is arranged between the cover (6) and the casing element (1).

12. Food preparation device (9) according to claim 11, **characterised in that** the rotating work tool (2; 202; 2') is maintained between the cover (6) and the casing element (1).

13. Food preparation device (9) according to claims 8 and 12, **characterised in that** the cover (6) comprises stops (19) provided for a sliding support on the peripheral ring (25; 225; 25').

14. Food preparation device (9) according to one of claims 11 to 13, **characterised in that** the cover (6) comprises a duct (68) for inserting food to be cut up.

15. Food preparation device (9) according to claim 14, **characterised in that** the casing element (1) has a cutting window (14) arranged opposite the duct (68), **in that** a secondary cutting tool (3; 4; 5) is arranged in the cutting window (14), and **in that** the rotating work tool (2; 2') comprises at least one main cutting edge (23; 23') which is located in a cutting plane (P) substantially perpendicular to the axis of rotation (Δ), and a press bevel (24) which comes from the main cutting edge (23; 23'), which is arranged on the side of the secondary cutting tool (3; 4; 5) arranged in the cutting window (14), and which is inclined from the main cutting edge (23) in a direction opposite to the direction of rotation of the rotating work tool (2; 2'), so as to press the sliced food against the secondary cutting tool (3; 4; 5) arranged in the cutting window (14).

16. Food preparation household electrical appliance comprising a motorised casing (99) driving in rotation a rotating work tool (2; 202; 2') belonging to a food preparation device (9), **characterised in that** the food preparation device (9) is according to one of claims 1 to 15.

17. Food preparation household electrical appliance according to claim 16, **characterised in that** the motorised casing (99) carries the food preparation device (9).
